# EUROPEAN PATENT APPLICATION

(11) **EP 4 818 987 A1**
(43) Date of publication of application: **07.10.2026**
(21) Application number: 24897903.1
(22) Date of filing: 28.10.2024
(51) Int. Cl.: G06N 5/04, G06F 9/50

(54) **METHOD AND SYSTEM FOR EFFICIENTLY COMPUTING LARGE LANGUAGE MODEL INFERENCE ON BASIS OF HETEROGENEOUS COMPUTING CLUSTER**

(30) Priority: 30.11.2023 KR 20230171405
(71) Applicant: Hyperaccel Co., Ltd., Seoul 06247 (KR)
(72) Inventor: PARK, Hyunjun, Seoul 06247 (KR); HONG, Seongmin, Seoul 06247 (KR)
(74) Representative: Jilderda, Anne Ayolt
(86) International application number: PCT/KR2024/016562
(87) International publication number: WO 2025/116306

(57) **Abstract**

A method and a system for efficiently computing large language model inference (LLM) on the basis of a heterogeneous computing cluster are provided. The inference system based on a heterogeneous computing cluster, according to one embodiment may comprise: a first device including a graphic processing unit (GPU) for processing a summarization stage of an LLM; and one or more second devices, each including an accelerator for a generation stage in order to process the generation stage of the LLM.

## Description

### BACKGROUND

### 1. Field of the Invention

Embodiments of the present disclosure relate to a method and a system for efficiently computing large language model inference based on a heterogeneous computing cluster.

### 2. Description of the Related Art

Large Language Models (LLMs) are models that calculate a probability distribution of the existence of natural language sentences using artificial neural networks, and are widely used in language-related tasks such as answering questions and translation.

As the size of large language models continues to increase, and the lengths of input sentences and output sentences required by users also increase, the time required to process inference computations is becoming increasingly longer. In this regard, various accelerators are being developed, but there is a problem in that there is not yet an accelerator optimized for both long input sentences and long output sentences.

Inference computation of a large language model can be broadly divided into a summarization stage that computes input tokens to extract core information, and a generation stage that creates output tokens based on the core information. The summarization stage and the generation stage have different computational characteristics, and therefore require different optimal solutions and devices. In the summarization stage, input tokens can be computed in parallel, so they can be processed well by a GPU (Graphic Processing Unit). However, in the generation stage, each output token must be computed sequentially, resulting in many continuous computations, so they can be processed well by an FPGA (Field Programmable Gate Array).

### SUMMARY

An object of the present disclosure is to provide a method and a system for efficiently computing large language model inference based on a heterogeneous computing cluster. Technical problems of the present disclosure are not limited to the above-mentioned technical problems, and other technical problems not mentioned will be clearly understood by those skilled in the art from the following description.

Provided is an inference system comprising: a first device including a GPU (Graphic Processing Unit) for processing a summarization stage of a large language model (LLM); and at least one second device to process a generation stage of the large language model, each including an accelerator for the generation stage.

According to one aspect, the first device may generate a key-value by processing an input token through the summarization stage using the GPU, and transfer the key-value to a corresponding second device among the at least one second device, and the corresponding second device may generate an output token through the generation stage using the accelerator included in the corresponding second device and the key-value transferred from the first device.

According to another aspect, the generation of the key-value in the first device and the transfer of the key-value from the first device to the corresponding second device may be performed asynchronously.

According to another aspect, the inference system may further include a third device including a CPU that converts a user's input sentence into an input token to transfer the input token to the first device, and converts an output token from each of the at least one second device into an output sentence to transfer the output sentence to a corresponding user.

According to another aspect, the third device may process scheduling for selecting a second device, among the at least one second device, to receive a processing result of the summarization stage of the first device.

According to another aspect, the first device and the at least one second device may be configured in a ratio of 1 to n, wherein n is a natural number of 1 or more.

Provided is an inference method of an inference system, comprising: generating, by a first device included in the inference system, a key-value by processing an input token through a summarization stage of a large language model (LLM) using a GPU (Graphic Processing Unit) included in the first device; transferring, by the first device, the key-value to a corresponding second device among at least one second device further included in the inference system, wherein each of the at least one second device includes an accelerator for a generation stage of the large language model; and generating, by the corresponding second device, an output token by processing the key-value through the generation stage using the accelerator included in the corresponding second device.

Specific details of other embodiments are included in the detailed description and drawings.

A method and system for efficiently computing large language model inference based on a heterogeneous computing cluster can be provided.

By utilizing the characteristics of large language models and the features of computational devices, a heterogeneous computing cluster system can be configured, and inference computations can be accelerated.

The effects of the present disclosure are not limited to the above-mentioned effects, and other effects not mentioned will be clearly understood by those skilled in the art from the description of the claims.

### BRIEF DESCRIPTION OF THE DRAWINGS

FIG. 1 is a diagram illustrating an example of an inference system based on a heterogeneous computing cluster, according to an embodiment of the present disclosure.
FIG. 2 is a diagram illustrating an example of communication between a GPU node and an FPGA node, according to an embodiment of the present disclosure.
FIG. 3 is a diagram illustrating an example of a computing timeline of an inference system based on a heterogeneous computing cluster, according to an embodiment of the present disclosure.
FIG. 4 is a flowchart illustrating an example of an inference method according to an embodiment of the present disclosure.

### DETAILED DESCRIPTION

Advantages and features of the present disclosure, and methods of achieving the same, will become apparent with reference to the embodiments described in detail below in conjunction with the accompanying drawings. However, the present disclosure is not limited to the embodiments disclosed below, but may be implemented in various different forms. The present embodiments are provided merely to make the disclosure of the present disclosure complete, and to fully inform those of ordinary skill in the art to which the present disclosure pertains of the scope of the invention, and the present disclosure is defined only by the scope of the claims. Like reference numerals refer to like elements throughout the specification.

When an element is referred to as being "connected to" or "coupled to" another element, it includes both a case where it is directly connected or coupled to the other element and a case where another element is interposed therebetween. On the other hand, when an element is referred to as being "directly connected to" or "directly coupled to" another element, it indicates that no other element is interposed therebetween. The term "and/or" includes each and all combinations of one or more of the referenced items.

The terms used in the present specification are for explaining the embodiments and are not intended to limit the present disclosure. In this specification, the singular forms also include the plural forms unless the context clearly indicates otherwise. The terms "comprises" and/or "comprising" used in the specification do not exclude the presence or addition of one or more other elements, steps, operations, and/or components to the mentioned elements, steps, operations, and/or components.

Although terms such as first, second, etc. may be used to describe various elements, these elements are not limited by these terms. These terms are only used to distinguish one element from another element. Therefore, a first element mentioned below may be a second element without departing from the technical spirit of the present disclosure.

Unless otherwise defined, all terms (including technical and scientific terms) used herein may be used with meanings commonly understood by those of ordinary skill in the art to which the present disclosure pertains. In addition, terms defined in a commonly used dictionary are not ideally or excessively interpreted unless explicitly defined specifically.

In embodiments of the present disclosure, an input sentence and an output sentence may correspond to a 'general language' that can be read and written by a human, and an input token and an output token may refer to an 'integer array' obtained by converting the input sentence and the output sentence through an embedding vector so that a computer can understand them.

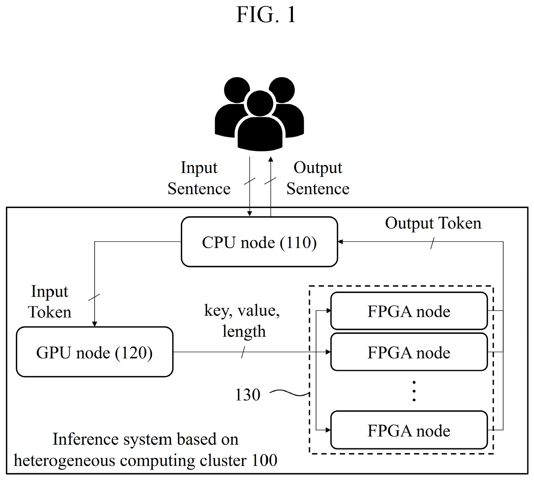

FIG. 1 is a diagram illustrating an example of an inference system based on a heterogeneous computing cluster, according to an embodiment of the present disclosure. Since the size of a large language model is large, a multi-device may be used as a computing device for the large language model. A large language model can be divided into two parts: a summarization stage and a generation stage. The summarization stage, which is a stage for processing computations on input tokens, involves many parallel computations, and thus can be efficiently processed through a multi-GPU (Graphic Processing Unit), which is a device suitable therefor. Conversely, the generation stage, which is a stage for processing computations on output tokens, requires sequential computations and frequent memory accesses, which reduces the efficiency of the multi-GPU, and thus can be efficiently processed through a multi-FPGA (Field Programmable Gate Array). Therefore, by configuring a computing system based on a heterogeneous computing cluster using both GPUs and FPGAs, inference of a large language model can be performed more efficiently than before.

Here, the term 'efficient' may imply various meanings, such as reducing the execution time of inference, maintaining hardware in an active state as much as possible (utilize), or lowering Total Cost of Ownership (TCO). The TCO may mean the total amount of money required for operation, including purchase costs and maintenance costs. In the embodiment of FIG. 1, a "node" may mean one or more servers. The number of FPGA servers may be equal to the number of CPU servers, but considering the latency of each device, when the number of FPGA servers is greater than the number of CPU servers and GPU servers, more tasks can be processed more efficiently.

In the following embodiments, it is described that a node or device including an FPGA processes the generation stage of a large language model, but the FPGA may be extended to an accelerator specialized for the generation stage. For example, the accelerator for processing the generation stage may be implemented as an FPGA-based accelerator, an NPU (Neural Processing Unit)-based accelerator, and/or a PIM (Processing-In-Memory)-based accelerator.

In the embodiment of FIG. 1, an inference system 100 based on a heterogeneous computing cluster may mainly include a CPU node 110, a GPU node 120, and a plurality of FPGA nodes 130.

The CPU node 110 may generate an input token by tokenizing a user's input sentence, and may translate an output token of a large language model into an output sentence. In addition, the CPU node 110 may perform a role of managing data transmission between devices and scheduling an FPGA node pool.

The GPU node 120 may process a summarization stage with the input token received from the CPU node 110. In addition, the GPU node 120 may perform a role of reshaping and/or permuting data so that the FPGA node can easily use it.

Each of the plurality of FPGA nodes 130 may generate an output token by processing a generation stage with data received from the GPU node 120. The generated output token may be converted into an output sentence through the CPU node 110 and delivered to a user. At this time, each of the nodes may be implemented as a different device.

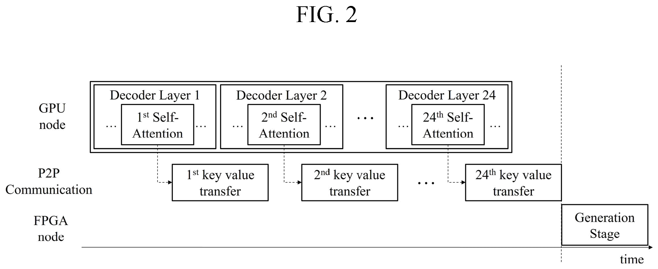

FIG. 2 is a diagram illustrating an example of communication between a GPU node and an FPGA node, according to an embodiment of the present disclosure. In order for each of the plurality of FPGA nodes 130 to process a generation stage, a key-value must be transferred from a summarization stage processed by the GPU node 120. Although the number varies depending on the model, a large language model consists of a plurality of decoders, and a key-value may be generated for each decoder. At this time, since decoder computation and communication between devices have no dependency on each other, the transfer of the key-value between the GPU node 120 and each of the plurality of FPGA nodes 130 may be performed asynchronously, thereby minimizing latency loss due to communication between devices. The embodiment of FIG. 2 illustrates an example in which a key-value generated through a summarization stage in an arbitrary GPU node is asynchronously transferred to a generation stage processed by an arbitrary FPGA node through P2P communication. In other words, the computation for the summarization stage of the GPU node and the communication between the GPU node and the FPGA node may be performed asynchronously.

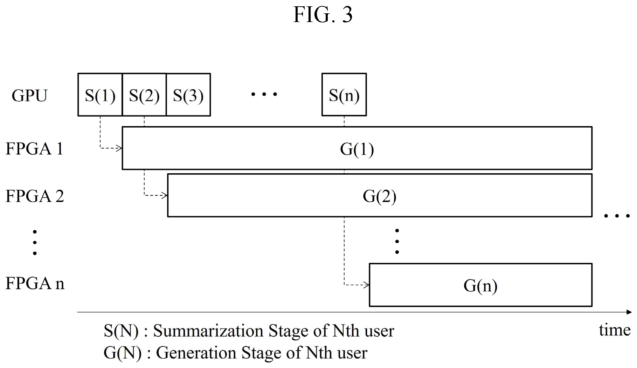

FIG. 3 is a diagram illustrating an example of a computing timeline of an inference system based on a heterogeneous computing cluster, according to an embodiment of the present disclosure. In the present embodiment, a ratio between the GPU node and the FPGA node may be configured as 1 to n, wherein n is a natural number of 1 or more. The embodiment of FIG. 3 illustrates an example in which a GPU and FPGAs are configured in a ratio of 1 to n, so that one GPU transfers computation results (for example, key-values) of a summarization stage for each of n FPGAs. However, the computation time required for the summarization stage of the GPU node is relatively shorter than the computation time required for the generation stage of the FPGA node. Therefore, if only one FPGA node is connected to one GPU node, an inactive time of the GPU node may occur. Accordingly, in order to maximize the utilization of all devices in the inference system 100, it may be preferable to set n to a natural number of 2 or more. However, a case where n is set to 1 is not excluded. Therefore, the plurality of FPGA nodes 130 described below is merely an embodiment, and utilizing a single FPGA node is not limited.

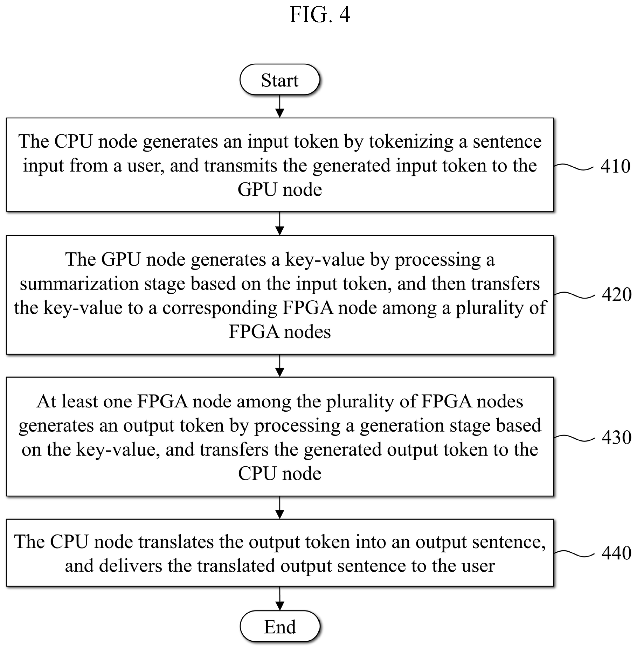

FIG. 4 is a flowchart illustrating an example of an inference method according to an embodiment of the present disclosure. The inference method according to the present embodiment may be performed by the devices (the CPU node 110, the GPU node 120, and the plurality of FPGA nodes 130) of the inference system 100 described above.

In step 410, the CPU node 110 may generate an input token by tokenizing a sentence input from a user, and transmit the generated input token to the GPU node 120. For example, the CPU node 110 may be implemented as a device including a CPU, and after converting an input sentence into an input token using the CPU, may transfer the converted input token to the GPU node 120.

In step 420, the GPU node 120 may generate a key-value by processing a summarization stage based on the input token, and then transfer the key-value to a corresponding FPGA node among the plurality of FPGA nodes 130. The GPU node 120 may be a device including a GPU for processing a summarization stage of a large language model. At this time, the GPU node 120 may generate a key-value by processing an input token through the summarization stage of the large language model using the GPU. As already described, the generation of the key-value in the GPU node 120 and the transfer of the key-value from the GPU node 120 to the corresponding FPGA node may be performed asynchronously.

According to an embodiment, the CPU node 110 may process scheduling for selecting an FPGA node, among the plurality of FPGA nodes 130, to receive a processing result (for example, a key-value) of the summarization stage. In other words, an FPGA node to receive the key-value in step 420 among the plurality of FPGA nodes 130 may be determined by the scheduling of the CPU node 110.

For example, when a plurality of users deliver a plurality of input sentences, the input sentence of each user may be converted into an input token through the CPU node 110 and transferred to the GPU node 120. The GPU node 120 may generate key-values by processing the summarization stage based on a plurality of input tokens for a plurality of users. At this time, FPGA nodes to which a plurality of key-values generated for a plurality of users are to be transferred may be respectively selected from among the plurality of FPGA nodes 130 through the CPU node 110.

In step 430, at least one FPGA node among the plurality of FPGA nodes 130 may generate an output token by processing the generation stage based on the key-value, and transfer the generated output token to the CPU node 110. The FPGA node may be a device including an FPGA for processing a generation stage of a large language model. The plurality of FPGA nodes 130 may be implemented as a plurality of devices each including an FPGA. At this time, the FPGA node that has received the key-value may generate an output token by processing the key-value through the generation stage of the large language model using the FPGA.

In step 440, the CPU node 110 may translate the output token into an output sentence, and deliver the translated output sentence to the user. For example, the CPU node 110 may convert the output token into an output sentence using the CPU, and then deliver the converted output sentence to the user.

As such, according to embodiments of the present disclosure, a method and a system for efficiently computing large language model inference based on a heterogeneous computing cluster can be provided. In addition, a heterogeneous computing cluster system can be configured and inference computations can be accelerated by utilizing characteristics of large language models and features of computing devices.

While embodiments of the present disclosure have been described above with reference to the accompanying drawings, those of ordinary skill in the art to which the present disclosure pertains will understand that the present disclosure may be implemented in other specific forms without changing its technical spirit or essential features. Therefore, it should be understood that the embodiments described above are illustrative in all respects and not restrictive.

## Claims

1. An inference system, comprising:
a first device including a graphic processing unit (GPU) for processing a summarization stage of a large language model (LLM);
at least one second device each including an accelerator for a generation stage of the large language model to process the generation stage; and
a third device including a central processing unit (CPU) that converts an input sentence of a user into an input token to transfer the input token to the first device, and converts an output token from each of the at least one second device into an output sentence to transfer the output sentence to a corresponding user,
wherein the first device generates a key-value by processing the input token through the summarization stage using the GPU, and transfers data including the key-value to a corresponding second device among the at least one second device by reshaping or permuting the data including the key-value for the accelerator,
wherein the corresponding second device generates an output token through the generation stage using the accelerator included in the corresponding second device and the data including the reshaped or permuted key-value transferred from the first device,
wherein the third device processes scheduling for selecting a second device, among the at least one second device, to receive the key-value generated in the first device,
and wherein, to reduce latency loss due to communication between devices, the generation of the key-value in the first device and the transfer of the key-value from the first device to the corresponding second device are performed asynchronously through peer-to-peer (P2P) communication.

2. The inference system of claim 1, wherein the first device and the at least one second device are configured in a ratio of 1 to n, and the n is a natural number of 1 or more.

3. The inference system of claim 1, wherein the at least one second device implements one server or two or more servers.

4. An inference method of an inference system, the method comprising:
generating, by a first device included in the inference system, a key-value by processing an input token through a summarization stage of a large language model (LLM) using a graphic processing unit (GPU) included in the first device;
transferring, by the first device, the key-value to a corresponding second device among at least one second device further included in the inference system, wherein each of the at least one second device includes an accelerator for a generation stage of the large language model, and the first device transfers data including the key-value to the corresponding second device by reshaping or permuting the data including the key-value for the accelerator; and
generating, by the corresponding second device, an output token by processing the key-value through the generation stage using the accelerator included in the corresponding second device,
wherein the method further comprises:
converting, by a third device further included in the inference system, an input sentence of a user into the input token to transfer the input token to the first device;
converting, by the third device, the output token transferred from the corresponding second device into an output sentence to transfer the output sentence to a corresponding user; and
processing, by the third device, scheduling for selecting a second device, among the at least one second device, to receive the key-value,
and wherein, to reduce latency loss due to communication between devices, the generation of the key-value in the first device and the transfer of the key-value from the first device to the corresponding second device are performed asynchronously through peer-to-peer (P2P) communication.
